# EUROPEAN PATENT APPLICATION

(11) **EP 3 876 106 A1**
(43) Date of publication of application: **08.09.2021**
(21) Application number: 18939218.6
(22) Date of filing: 06.12.2018
(51) Int. Cl.: G06F 16/13, G06F 16/16, G06F 16/174

(54) **FILE STORAGE METHOD AND DELETION METHOD, SERVER, AND STORAGE MEDIUM**

(30) Priority: 08.11.2018 CN 201811323051
(71) Applicant: Wangsu Science & Technology Co., Ltd., Shanghai 201800 (CN)
(72) Inventor: LAI, Zhiyang, Shanghai 201800 (CN)
(74) Representative: De Arpe Tejero, Manuel
(86) International application number: PCT/CN2018/119594
(87) International publication number: WO 2020/093501

(57) **Abstract**

Embodiments of the present disclosure relate to the field of storage technologies, and provide a file storage method, a deletion method, a server, and a storage medium. The file storage method includes receiving a file to-be-stored, detecting, in stored storage files, whether there is a storage file that is same as the file to-be-stored, and when there is the storage file that is same as the file to-be-stored, generating a path pointing to a storage address of the storage file same as the file to-be-stored, and storing the path generated as the file to-be-stored. With the embodiments of the present disclosure, a same file is stored only once in a file storage process, such that a storage space may be optimized.

## Description

### FIELD

The present disclosure generally relates to the field of storage technologies and, more particularly, relates to a file storage method.

### BACKGROUND

With rapid development of the Internet, many new storage devices have been created, such as file resource servers. Usually, a plurality of users may share a storage space, and each user may have an own space for storing files. As time goes on, consumption of the storage space may continuously increase.

However, the inventors of the present disclosure found that a conventional technology might have following problems. Due to uncontrollability of user behaviors, when a plurality of users respectively stores a same file, repeated storage of the same file may occur. Accordingly, the storage space may be unnecessarily occupied, and storage resources may be wasted. If the problem of repeated storage of files is solved by adding a file resource server, etc., a huge cost may be resulted in.

### BRIEF SUMMARY OF THE DISCLOSURE

An object of the present disclosure is to provide a file storage method, a deletion method, a server, and a storage medium, to solve a problem of occupying storage space when a same file is repeatedly stored, such that the same file is stored only once in a file storage process to achieve optimization of a storage space.

To solve the above technical problems, embodiments of the present disclosure provide a file storage method, including the following steps: receiving a file to-be-stored, and detecting, in stored storage files, whether there is a storage file that is same as the file to-be-stored. When there is the storage file that is same as the file to-be-stored, generating a path pointing to a storage address of the storage file same as the file to-be-stored, and storing the path generated as the file to-be-stored.

The embodiments of the present disclosure also provide a file deletion method, including the following steps: receiving a file deletion instruction, and if the file to-be-deleted is a file stored in a form of a path, deleting the path stored.

The embodiments of the present disclosure also provide a server. The server includes at least one processor and a memory communicably coupled to the at least one processor. The memory stores instructions executable by the at least one processor. The instructions are executed by the at least one processor, such that the at least one processor may execute the above file storage method or execute the above file deletion method.

The embodiments of the present disclosure also provide a computer readable storage medium. The computer readable storage medium is stored with a computer program. When the computer program is executed by a processor, the above file storage method may be executed, or the above file deletion method may be executed.

Compared to a conventional technology, in the embodiments of the present disclosure, a file to-be-stored is received, and it is first determined, in stored storage files, whether there is a storage file that is same as the file to-be-stored. When there is the storage file that is same as the file to-be-stored, generating a path pointing to a storage address of the storage file same as the file to-be-stored, and storing the path generated as the file to-be-stored. That is, for a file that is repeatedly stored, only a path to a storage address of a same storage file is saved, and the user may also access the file to-be-stored through the path stored. Occupation of the storage space may be reduced, utilization of the storage space may be improved, and optimization of the storage space may be realized. Moreover, changing from storing a file to storing a path does not require additional operations by a user. The changing is simple and practical, and does not incur excessive cost.

In addition, detecting, in the stored storage files, whether there is the storage file that is same as the file to-be-stored comprises: calculating a message digest of the file to-be-stored, and detecting, in the stored storage files, whether there is a storage file having a message digest same as the message digest of the file to-be-stored. If there is no file having the message digest same as the message digest of the file to-be-stored, it is determined that there is no storage file same as the file to-be-stored. If there is the storage file having the same message digest, contents of the file to-be-stored and the storage file having the same message digest are compared. If the contents are same, it is determined that there is the storage file same as the file to-be-stored, and if the contents are not same, it is determined that there is no storage file same as the file to-be-stored. In this way, a specific implementation method is provided for detecting a same storage file. First, by detecting the message digest, it may be determined whether there is a storage file that is same as the file to-be-stored. Since a specified message digest may be calculated for each file, it may be detected whether there is a storage file having a same message digest as the file to-be-stored. Most of the same stored files may be detected in this way. In addition, a case of message digest collision needs to be considered. That is, a plurality of files may have a same message digest. Through comparison of file contents, it may be determined whether there is a same storage file, and accuracy of detecting whether there is a same storage file may be improved.

In addition, calculating the message digest of the file to-be-stored includes: when a size of the file to-be-stored is less than a preset threshold, directly calculating the message digest of the file to-be-stored; and when the size of the file to-be-stored is greater than or equal to the preset threshold, dividing the file to-be-stored into a preset size, and calculating the message digest of the file to-be-stored according to divided data. In this way, a method for calculating the message digest of the file to-be-stored is provided. Calculation of the message digest is specifically to calculate a feature string that may represent the file itself. When the file size to-be-stored is greater than or equal to the preset threshold, the message digest may be obtained by calculating a message digest of the data of the divided files. In this way, not only calculation accuracy of the message digest may be ensured, but also computation pressure when the server performs above operations may be reduced.

In addition, comparing contents of the file to-be-stored and the storage file having the same message digest includes: determining whether the file to-be-stored and the storage file having the same message digest have a same length; if the file to-be-stored and the storage file having the same message digest have different lengths, determining that the contents of the file to-be-stored are different from the contents of the storage file having the same message digest; and if the file to-be-stored and the storage file having the same message digest have a same length, dividing the file to-be-stored and the storage file having the same message digest respectively into divided parts by a binary search method, and sequentially comparing contents of each divided part, until contents of a divided part are found to be different or contents of all the divided parts are compared. In this way, it is first determined whether the file to-be-stored and the storage file having the same message digest have a same length. If the lengths of the files are different, the contents of the files are different. Therefore, comparing file lengths may effectively reduce working pressure of the server when performing the above operation. When the lengths are same, the contents of the files are compared. Specifically, the files are respectively divided by a binary search method, and contents of divided parts are compared, and thus efficiency and accuracy of the comparison may be improved. As such, misjudgment of a same storage file in the case of message digest collision may be avoided, and accuracy of detecting whether there is a same storage file may be improved.

In addition, generating the path pointing to the storage address of the storage file same as the file to-be-stored includes generating a soft link or a shortcut of the file to-be-stored; and linking the soft link or the shortcut generated to the storage address of the storage file same as the file to-be-stored. Storing the path generated as the file to-be-stored includes storing the soft link or shortcut of the file to-be-stored. The soft link or shortcut is a normal file for storing a path. Usually, a size of the soft link or shortcut is much smaller than a size of the file to-be-stored, and the soft link or shortcut does not affect contents and attributes of the same storage file which is pointed to by the soft link or shortcut. When a user accesses the path, the user may be redirected to a file same as the file to-be-stored. That is, the user's access to the file to-be-stored is not affected by the soft link or shortcut. Meanwhile, occupation of the storage space may be reduced, utilization of the storage space may be improved, and storage space may be optimized. And generating a soft link or shortcut is simple and does not incur excessive costs.

In addition, when there is no storage file same as the file to-be-stored, the file storage method also includes storing the file to-be-stored, and generating a location file of the file to-be-stored, wherein the location file includes a message digest of the file to-be-stored and a path pointing to a storage address of the file to-be-stored. After storing the path generated as the file to-be-stored, the file storage method also includes generating a location file of the file to-be-stored, wherein the location file includes a message digest of the file to-be-stored and a file name of the storage file same as the file to-be-stored. In this way, when there is no storage file same as the file to-be-stored, the file to-be-stored may be normally stored. After the file to-be-stored is normally stored, the location file may be generated including a message digest of the file to-be-stored and a path or a storage address of the file to-be-stored. In this way, a user may quickly obtain information related to the file to-be-stored, and it may be helpful to perform operations such as deleting the file to-be-stored in future.

The file deletion method is applied to a server, and the server stores a location file of each storage file, wherein the location file is used to store a message digest of the storage file, and a path pointing to a storage address or a file name of a storage file same as the file to-be-deleted. The file deletion method also includes after receiving the file deletion instruction, reading a location file of the file to be delete, determining, in the location file of the file to-be-deleted, whether there is a file name of a storage file same as the file to-be-deleted, if there is the file name of the storage file same as the file to-be-deleted in the location file, determining that the file to-be-deleted is a file stored in a form of a path, and deleting the location file of the file to-be-deleted. In this way, the message digest and link of the file to-be-deleted may be easily deleted, and unnecessary occupation of the server storage space may be reduced.

In addition, the server also stores a message digest list, wherein the message digest list is used to store a message digest and a file name of a storage file corresponding to each message digest; and the server also stores a link list, wherein each link in the link list corresponds to a message digest in the message digest list; and the link list is used to store at least one link of a storage file, and the link includes a source file to which the storage file is linked, and a storage address of the source file or a path pointing to the storage address of the source file. The file detection method also includes after deleting the location file of the file to-be-deleted, according to the message digest of the file to-be-deleted, in the message digest list, deleting the file name of the file to-be-deleted corresponding to the message digest of the file to-be-deleted, and according to the message digest of the file to-be-deleted, obtaining a link list corresponding to the message digest, and in the link list corresponding to the message digest, deleting the link of the file to-be-deleted. In this way, an approach for storing a message digest and link of a storage file is provided, and an approach for deleting the message digest and link of the storage file is also provided.

After deleting the path stored, the file deletion method also includes determining, in the link list corresponding to the message digest, whether there is still a link linking to a same source file to which the file to-be-deleted is linked, and if whether there is no link linking to a same source file to which the file to-be-deleted is linked, releasing a storage space occupied by the source file to which the file to-be-deleted is linked. In this way, unnecessary occupation of the server storage space may be reduced.

In addition, after releasing the storage space occupied by the source file to which the file to-be-deleted is linked, the file deletion method also includes determining, in the message digest list, whether there is still a file name of a file having a message digest same as the message digest of the file to-be-deleted, and if there is no file having a message digest same as the message digest of the file to-be-deleted, deleting the message digest in the message digest list. In this way, unnecessary occupation of the server storage space may be reduced.

### BRIEF DESCRIPTION OF THE DRAWINGS

One or a plurality of embodiments are exemplarily described through accompanying drawings corresponding to the embodiments. The accompanying drawings do not constitute a limit to the embodiments.
Figure 1 illustrates a flowchart of an exemplary file storage method according to a first embodiment of the present disclosure;
Figure 2 illustrates a flowchart of an exemplary file storage method according to a second embodiment of the present disclosure;
Figure 3 illustrates a flowchart of an exemplary file deletion method according to a third embodiment of the present disclosure; and
Figure 4 illustrates a structural schematic of an exemplary server according to a fourth embodiment of the present disclosure.

### DETAILED DESCRIPTION

To make objectives, technical solutions and advantages of the present disclosure more explicit, embodiments of the present disclosure are described below in detail with reference to accompanying drawings. However, it is apparent to those skilled in the art that, in each of the embodiments of the present disclosure, technical details are provided for readers to better understand the present disclosure, but these technical details do not limit specific implementations of the present disclosure. Technical solutions claimed by the present disclosure may be implemented without these technical details and various changes and modifications based on the embodiments of the present disclosure.

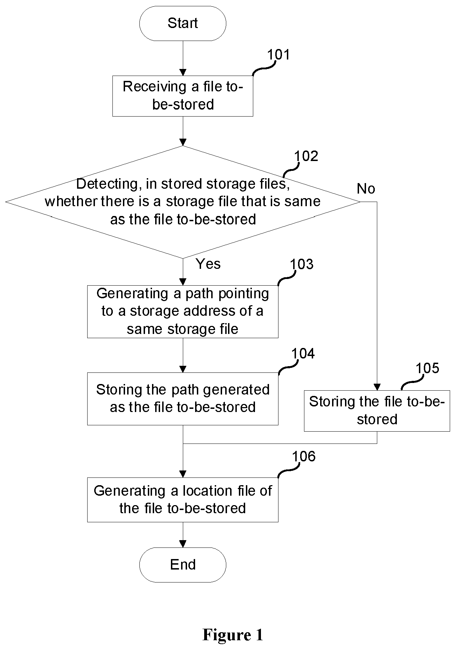

A first embodiment of the present disclosure relates to a file storage method, and a specific process is shown in Figure 1. In the first embodiment, in a file storage process, a same file is stored only once to optimize a storage space. The process shown in Figure 1 is described below in detail.

Step 101: receiving a file to-be-stored.

Specifically, the file to-be-stored is uploaded by a user, and a server receives the file to-be-stored and temporarily stores the file to-be-stored in a space of the server dedicated to temporary storage of files. The file to-be-stored that is temporarily stored may be accessed normally by a user. In this way, a normal access of a user to the file to-be-stored is not affected, and the file to-be-stored is not directly stored to a storage space, thereby reducing occupation of the storage space.

Step 102: detecting, in stored storage files, whether there is a storage file that is same as the file to-be-stored. If yes, executing Step 103. If no, executing Step 105.

Specifically, if there is a storage file that is same as the file to-be-stored, to save and utilize the storage space, the file to-be-stored is not repeatedly stored. If there is no storage file that is same as the file to-be-stored, the file to-be-stored is stored normally.

More specifically, after receiving the file to-be-stored, a message queue approach may be used to notify the server to perform a task of detecting file duplication That is, after receiving the file to-be-stored, the server starts to detect whether there is a storage file that is same as the file to-be-stored in the stored storage files. In this way, resources of the server may be utilized more effectively.

Step 103: generating a path pointing to a storage address of a same storage file.

Specifically, when there is a storage file that is same as the file to-be-stored, a path pointing to a storage address of the storage file is generated. That is, an approach for a user to link to the storage file is provided. In this way, the user's access to the file to-be-stored in future is not affected. Moreover, a process of generating the path does not require additional operations by the user. The process is simple and practical, and does not incur excessive cost.

More specifically, generating the path pointing to the storage address of the same storage file includes generating a soft link or a shortcut of the file to-be-stored. For example, a shortcut for the file to-be-stored may be generated in a Windows system, and a soft link to the file to-be-stored may be generated in a Linux system. The soft link or shortcut is a normal file for storing a path. Usually, a size of the soft link or shortcut is approximately 6B, much smaller than a size of the file to-be-stored, and does not affect contents and attributes of the same storage file which is pointed to by the soft link or shortcut.

Step 104: storing the path generated as the file to-be-stored.

Specifically, the file to-be-stored that has been stored is not stored repeatedly, and only the path pointing to the storage address of the same storage file is stored. Accordingly, the storage space may be reduced, and the utilization of the storage space may be improved. When the size of the file to-be-stored is larger, an effect of saving the storage space is better, and the utilization of the storage space is higher. For example, usually a size of the path generated (soft link or shortcut) is approximately 6B. When the size of the file to-be-stored is 5M, by saving the path generated as the file to-be-stored, the storage space may be optimized by approximately 5*1024*1024/6B.

More specifically, the path generated is stored as the file to-be-stored. That is, the soft link or shortcut for the file to-be-stored is stored. When a user accesses the path, the user may be redirected to a file same as the file to-be-stored. In this way, the user's access to the file to-be-stored is not affected. Meanwhile, occupation of the storage space may be reduced, utilization of the storage space may be improved, and storage space may be optimized.

Step 105: storing the file to-be-stored.

Specifically, when it is determined in Step 102 that there is no storage file same as the file to-be-stored, the file to-be-stored is normally stored in the storage space.

Step 106: generating a location file of the file to-be-stored.

Specifically, when the file to-be-stored is a file stored as a path, the location file generated includes a message digest of the file to-be-stored and the path generated. When the file to-be-stored is not a file stored as a path, the location file generated includes a message digest of the file to-be-stored and a storage address of the file to-be-stored. In this way, a user may quickly obtain information related to the file to-be-stored when opening the location file, and it may be helpful to perform operations such as deleting the file to-be-stored in future.

Compared with a conventional technology, the first embodiment may effectively save the storage space by not repeatedly storing a file and only storing a path pointing to a storage addresses of a same storage file. In a conventional technology, due to uncontrollability of user behaviors, a same file may be repeatedly stored. For example, user A uploads a document 1 with a size 5M, user B, user C, etc. also upload the document 1, such that N users upload the document 1 and N copies of the document 1 with a size 5M are repeatedly stored in the storage space. However, (N-1) copies of the document 1 belong to redundant storage. That is, a size of the storage space of (N-1)*5M is wasted. In the present disclosure, when the (N-1) users, including the user B, the user C, etc., all upload the document 1, only the path pointing to the storage address of the stored document 1 is stored. Accordingly, occupation of the storage space may be reduced, utilization of the storage space may be improved, and optimization of the storage space may be realized. Changing from storing a file to storing a path does not require additional operations by a user. The changing is simple and practical, and does not incur excessive cost. After the file to be saved is saved, a location file of the file to-be-stored is generated, such that information about the file to-be-stored may be quickly obtained, and the location file may be helpful for operations such as deleting the file to-be-stored in future.

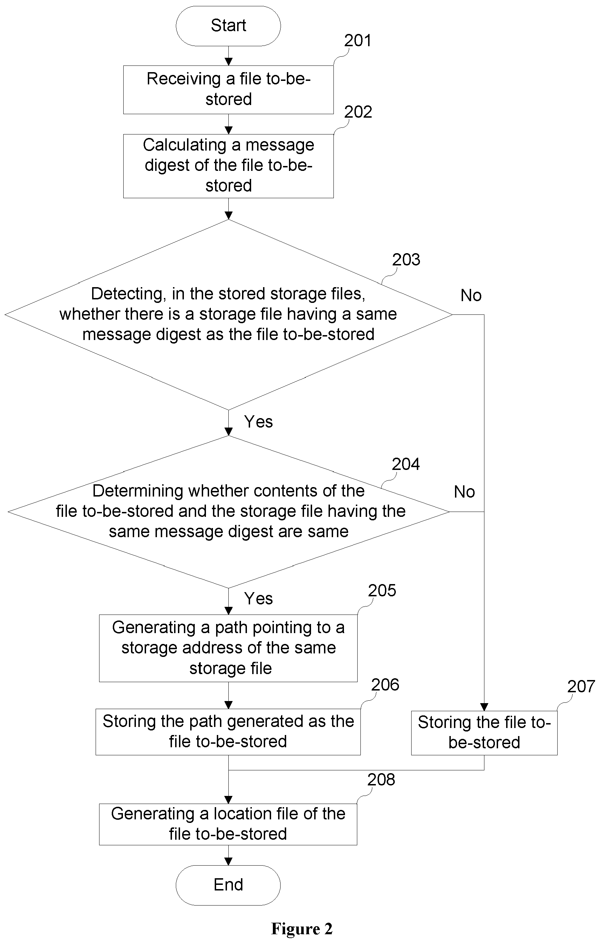

A second embodiment of the present disclosure relates to a file storage method, and a specific process is shown in Figure 2. The second embodiment is substantially same as the first embodiment. A main difference is that in the second embodiment of the present disclosure, further refinement is performed on how to detect, in the stored storage files, whether there is a file same as the file to-be-stored. The process shown in Figure 2 is described below in detail.

Step 201: receiving a file to-be-stored. This step is same as Step 101, and is not described here.

Step 202: calculating a message digest of the file to-be-stored.

Specifically, each file has a specified message digest. Essence of the message digest is a feature string consisting of several bytes, and the feature string may be calculated from a file including a plurality of bytes by a certain calculation. The second embodiment provides a method for calculating the message digest of the file to-be-stored. When a size of the file to-be-stored is less than a preset threshold, the number of bytes of the file to-be-stored is small, and the message digest of the file to-be-stored may be directly calculated. When the size of the file to-be-stored is greater than or equal to the preset threshold, the file to-be-stored may be divided into several data groups, and message digests of the data groups may be respectively calculated. In this way, not only calculation accuracy of the message digest may be ensured, but also computation pressure when the server performs above operations may be reduced.

Step 203: detecting, in the stored storage files, whether there is a storage file having a same message digest as the file to-be-stored. If yes, executing Step 204. If no, determining that there is no storage file same as the file to-be-stored, and performing Step 207

Specifically, Step 203 provides a specific implementation method for detecting a same storage file. First, by detecting the message digest, it may be determined whether there is a storage file that is same as the file to-be-stored. Since a specified message digest may be calculated for each file, it may be detected whether there is a storage file having a same message digest as the file to-be-stored. Most of the same stored files may be detected in this way. When there is no file having a same message digest as the file to-be-stored, that is, there is no file having a same contents as the file to-be-stored, it may be determined that there is no storage file same as the file to-be-stored.

Step 204: determining whether contents of the file to-be-stored and the storage file having the same message digest are same. If yes, determining that there is a storage file same as the file to-be-stored, and performing Step 205. If no, determining that the contents of the file to-be-stored and the contents of the storage file having a same message digest are different, and performing Step 207.

Specifically, when there is a storage file with a same message digest with the file to-be-stored, a case of message digest collision needs to be considered. That is, a plurality of files may have a same message digest. A message digest algorithm is to calculate a feature string composed of a plurality of bytes from a file composed of a plurality of bytes. For a file larger than a certain number of bytes, the feature string calculated is a subset, such that there may be two or more different files having a same feature string. At this time, comparison of file contents between the file to-be-stored and the storage file having a same message digest may effectively improve accuracy of detecting whether there is a same storage file.

More specifically, to determine whether the contents of the file to-be-stored and the storage file having a same message digest are same, it is first determined whether the file to-be-stored and the storage file having the same message digest have a same length. If the length of the file to-be-stored is different from the length of the storage file having the same message digest, the contents of the file to-be-stored and the storage file are different. Therefore, comparing file lengths may effectively reduce working pressure of the server when performing the above operation. When the lengths are same, the contents of the files are compared. Specifically, the file to-be-stored and the storage file having the same message digest are respectively divided by a binary search method, and the contents of each divided part is sequentially compared. In this way, the contents of the files are compared in an orderly manner, and a size of each divided part of each comparison is within a certain range, and thus efficiency and accuracy of the comparison may be improved. Through this comparison method, misjudgment of a same storage file in the case of message digest collision may be avoided, and accuracy of detecting whether there is a same storage file may be improved.

More specifically, the above comparison process is performed in a backstage of the server. Accordingly, the above comparison process does not block main-flow operations, and does not affect a normal use of the server. That is, resources of the server may be effectively utilized.

Step 205: generating a path pointing to a storage address of the same storage file. This step is same as Step 103 and is not be described here.

Step 206: storing the path generated as the file to-be-stored. This step is same as Step 104 and is not described here.

Step 207: storing the file to-be-stored. This step is same as Step 105 and is not described here.

Step 208: generating a location file of the file to-be-stored. This step is same as Step 106 and is not described here.

In the second embodiment, if there is a storage file having a same message digest, a same length, and a same contents as the file to-be-stored, it indicates that the stored storage files include a storage file same as the file to-be-stored, and the file to-be-stored does not need to be repeatedly stored. If there is no storage file having same contents with the file to-be-stored, it means that there is no storage file same as the file to-be-stored, and the file to-be-stored will be stored normally. In this way, the storage file same as the file to-be-stored may be accurately determined such that a storage mode of the file to-be-stored may be determined.

Following is a description with an example.

A message digest list is stored in a server. The message digest list is used to store a message digest and a file name of each storage file, and the message digest of each storage file corresponds to the file name of the storage file. The server also stores a link list corresponding to each message digest in the message digest list. The link list is used to store at least a link of a storage file. The link includes a source file to which the storage file is linked, and a storage address of the source file or a path pointing to the storage address of the source file.

The server receives a file to-be-stored A, and renames the file to-be-stored A as a file to-be-stored xA to ensure uniqueness of a file name. A combination of a time stamp and a random value may also be used as a renamed file name of the file to-be-stored. The file to-be-stored xA is temporarily stored in a space dedicated to temporary files in the server.

Then, a message digest of the file to-be-stored xA is calculated. For example, by using a Message Digest Algorithm 5 (MD5) algorithm, an MD5 value of the file to-be-stored xA may be calculated (in the following, the message digest of the file to-be-stored xA is referred to as AMD5). If a file size of the file to-be-stored xA is less than a preset threshold 5M, AMD5 is directly calculated. If the file size of the file to-be-stored is greater than or equal to the preset threshold 5M, the file to-be-stored is divided into n equal parts of data, and each equal part of data has a size of 256K. Three equal parts of data are taken, including a first equal part, a (n/2)-th equal part, and the n-th equal part. Then, by taking the second equal part and the ((n/2)-1)-th equal part as the starting data and the ending data, three equal parts of data are taken. Then, by taking the ((n/2)+1)-th equal part and the (n-1)-th equal part as the starting data and the ending data, three equal parts of data are taken until 20 equal parts of data are finally obtained. Combined data are obtained by combing the 20 equal parts in order, and a message digest may be obtained by calculating the combined data. The message digest obtained is taken as AMD5. The following is a specific description with an example. The file to-be-stored xA is divided into 1000 equal parts of data. A size of each equal part of data is 256K. Three equal parts of data are taken, including the first equal part, the 500th equal part, and the 1000th equal part. Then another three equal parts of data are taken, including the second equal part, the 250th equal part, the 499th equal part. Then another three equal parts of data are taken, including the 501th equal part, the 750th equal part, and the 999th equal part, ... until 20 equal parts of data in total are taken. The 20 equal parts of data are sequentially combined according to sequence numbers of the equal parts of data, obtaining a plurality of bytes. A message digest is calculated from the plurality of bytes obtained, and the message digest is taken as the MD5 value of the file to-be-stored xA. Results obtained by dispersedly selecting data are better than results obtained by continuously selecting data.

Then, it is found out whether AMD5 exists in the message digest list.

If AMD5 does not exist in the message digest list, there is no storage file same as the file to-be-stored xA in the stored storage files. Then, the file to-be-stored xA is stored in the server, the message digest AMD5 and the corresponding file name xA are added in the message digest list (as shown in Table 1), and a link list corresponding to AMD5 (i.e., Table 2 shown below) is added. A link of the file to-be-stored xA is stored in the link list corresponding to the AMD5, in a form of "xA_xA" (as shown in Table 2). "xA xA" indicates that the source file of the file to-be-stored xA is the file to-be-stored xA itself, and the storage address of the file to-be-stored xA is xA. A location file xA.links of the file to-be-stored xA is generated a storage directory of the file to-be-stored xA. In the location file xA.links, AMD5 and a path pointing to the storage address of the file to-be-stored xA is written in a form of "AMD5_xA".

**Table 1. Message Digest List 1-1**

| Message Digest | File Name |
|---|---|
| AMD5 | xA |
| CMD5 | xC |
| ...... | ...... |

**Table 2. Link List Corresponding to AMD5 1-1**

| |
|---|
| xA_xA |

If AMD5 exists in the message digest list, the file name xA is added to the file names corresponding to AMD5 (as shown in Table 3 and Table 5). It may be found from the file names corresponding to AMD5 that a file B has a same message digest AMD5 (as shown in Table 3), and the file B may be obtained from the server. Then the file to-be-stored xA and the file B are compared to determine whether the file to-be-stored xA and the file B are same. First, it is determined whether the file to-be-stored xA and the file B have a same length. If the file to-be-stored xA and the file B do not have a same length, it may be determined that contents of the file to-be-stored xA and the file B are inconsistent. If the file to-be-stored xA and the file B have a same length, the file to-be-stored xA and the file B are respectively divided into n equal parts of data, and a size of each equal part of data is 256K. Three parts of data, including the first equal part, the (n/2)-th equal part, and the n-th equal part, are taken from the file to-be-stored xA and the file B, and are sequentially compared. Then, for each of the file to-be-stored xA and the file B, the second equal part and the ((n/2)-1)-th equal part are used as the start data and the end data respectively, and three parts of data are then sequentially taken for comparison. Then, for each of the file to-be-stored xA and the file B, the ((n/2)+1)-th equal part and the (n-1)-th equal part are used as the start data and the end data respectively, and three equal parts of data are sequentially taken for comparison. Until all the contents are compared to be same, the contents of the file to-be-stored xA and the file B may be determined to be consistent. If there is any inconsistency in comparison of contents, the contents of the file to-be-stored xA and the file B may be determined to be inconsistent.

If the contents of the file to-be-stored xA and the file B are determined to be consistent, the file to-be-stored xA temporally stored in the server is deleted. A path pointing to the storage address of the file B is generated and named as xA, and the path xA generated is stored as the file to-be-stored xA in the server. And in the link list corresponding to AMD5, a link to the file to-be-stored xA is newly added, and is stored in a form of "B_xA" (as shown in Table 4). "B_xA" indicates that the source file of the file to-be-stored xA is the file B, and the path pointing to the storage address of the file B is xA. A location file xA.links of the file to-be-stored xA is generated in the storage directory of the file to-be-stored xA. In the location file xA.links, AMD5 and a file name of the storage file same as the file to-be-stored xA are written in a form of "AMD5 B".

**Table 3. Message Digest List 1-2**

| Message Digest | File Name |
|---|---|
| AMD5 | xA, B |
| CMD5 | xC |
| ...... | ...... |

**Table 4. Link List Corresponding to AMD5 1-2**

| |
|---|
| B_xA |

If it is determined that the contents of the file to-be-stored xA is inconsistent with the contents of the file B, the file to-be-stored xA is stored in the server. In the link list corresponding to AMD5, the storage address of the file to-be-stored xA is newly added and is stored in a form of "xA xA" (as shown in Table 6). "xA xA" indicates that the source file to which the file to-be-stored xA is linked is the file to-be-stored xA itself, and the storage address of the file to-be-stored xA is xA. A location file xA.links of the file to-be-stored xA is generated in the storage directory of the file to-be-stored xA. In the location file xA.links, AMD5 and a path pointing to the storage address of the file to-be-stored xA are written in a form of "AMD5_xA".

**Table 5. Message Digest List 1-3**

| Message Digest | File Name |
|---|---|
| AMD5 | xA, B |
| CMD5 | xC |
| ...... | ...... |

**Table 6. Link List Corresponding to AMD5 1-3**

| |
|---|
| xA_xA |
| B_B |
| B_X |
| B_Y |
| .... |

Compared with a conventional technology, the second embodiment calculates the message digest of the file to-be-stored in different manners according to the size of the file to-be-stored. Calculation accuracy of the message digest may be ensured, and calculation pressure when the server performs the above operation may be reduced. Existence of a storage file same as the file to-be-stored may be determined by comparing the length and contents of the file to-be-stored with the length and contents of the storage file having a same message digest. Thereby misjudgment of a same storage file in message digest collision may be effectively avoided, and accuracy of detecting the existence of a same stored file may be improved without affecting normal use of the server.

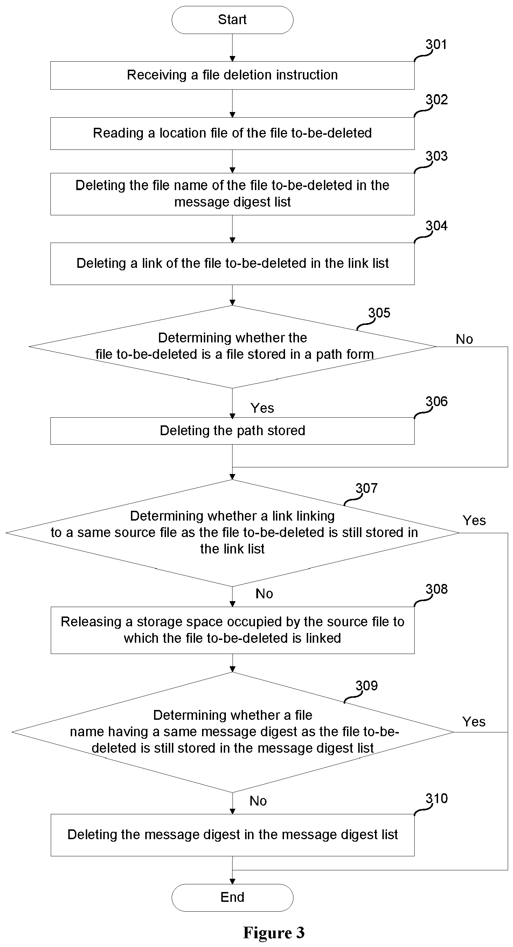

A third embodiment of the present disclosure relates to a file deletion method. A specific process of the third embodiment is shown in Figure 3. In the third embodiment, the server stores a location file of each storage file. The location file is used to store a message digest of the storage file, and a path pointing to a storage address or a file name of a same storage file. The server also stores a message digest list. The message digest list is used to store a message digest and a file name of a storage file corresponding to each message digest, and the message digest of each storage file corresponds to the file name. The server also stores a link list. In the link list, each link corresponds to a message digest in the message digest list. The link list is used to store at least one link of a storage file. The link includes a source file to which a storage file is linked, and a storage address of the source file or a path pointing to the storage address of the source file. In the third embodiment, a method for deleting a file stored in a path form is provided. A way to store a message digest and a link of a storage file is also provided, such that the link of the storage file may be quickly searched and deleted. In a process of deleting a file, it is determined whether a message digest is deleted or not, such that occupation of a server space by useless data may be effectively reduced. The process of Figure 3 is described below in detail.

Step 301: receiving a file deletion instruction.

Specifically, an instruction to delete a file issued by a user is received, where the file to-be-deleted by the user is the file uploaded and stored by the user.

Step 302: reading a location file of the file to-be-deleted.

Specifically, after receiving the file deletion instruction, a location file ".links" of the file to-be-deleted is read in a storage directory of the file to-be-deleted. A message digest of the file to-be-deleted, and a path pointing to a storage address or a file name of a same storage file, may be obtained from contents of the location file, such that the message digest and link of the file to-be-deleted may be deleted. If a file name of a same storage file is stored in the location file, it may be determined that the file to-be-deleted is a file stored in a path form. If a path pointing to a storage address is stored in the location file, it may be determined that the file to-be-deleted is not a file stored in a path form. Subsequently, the location file of the file to-be-deleted is deleted to reduce unnecessary occupation of the server storage space.

Step 303: deleting the file name of the file to-be-deleted in the message digest list.

Specifically, since in the message digest list, a message digest of each storage file corresponds to a file name, the file name of the file to-be-deleted is deleted in the message digest list according to the obtained message digest of the file to-be-deleted.

Step 304: deleting a link of the file to-be-deleted in the link list.

Specifically, according to the message digest of the file to-be-deleted obtained by reading the location file, a link list corresponding to the message digest of the file to-be-deleted may be obtained. The link of the file to-be-deleted in the corresponding link list is deleted.

Step 305: determining whether the file to-be-deleted is a file stored in a path form. If yes, executing Step 306. If no, executing Step 307.

Specifically, after the location file of the file to-be-deleted is read, the path pointing to the storage address or the file name of the same storage file may be obtained from the contents of the location file. If the file name of the same storage file is stored in the location file, it may be determined that the file to-be-deleted is a file stored in a path form, and Step 306 is executed. If the path pointing to the storage address is stored in the location file, it may be determined that the file to-be-deleted is not stored in a path form, and Step 307 is executed.

Step 306: deleting the path stored.

Specifically, if the file to-be-deleted is a file stored in a path form, when the path stored is deleted, the file to-be-deleted is deleted.

Step 307: determining whether a link linking to a same source file as the file to-be-deleted is still stored in the link list. If yes, ending the process. If no, executing Step 308.

Specifically, in the link list corresponding to the message digest of the file to-be-deleted, it may be determined whether a link linking to the same source file, to which the file to-be-deleted is linked, is still stored. If yes, it is indicated that there may be a plurality of files, with different origins, linked to the source file to which the file to-be-deleted is linked. The source file to which the file to-be-deleted is linked belongs to useful data and needs to be retained. If no, the link of the same source file stored to the link list at the time of storing the same source file has also been deleted, and the source file to which the file to-be-deleted is linked is useless data and need to be deleted.

Step 308: releasing a storage space occupied by the source file to which the file to-be-deleted is linked.

Specifically, since, in the link list, there is no link linking to the source file to which the file to-be-deleted is linked, there is no other file that needs to be linked to the source file to which the file to-be-deleted is linked. Accordingly, the source file to which the file to-be-deleted is linked is deleted from the server, and the storage space occupied by the source file is released, thereby reducing unnecessary occupation of the storage space of the server.

Step 309: determining whether a file name having a same message digest as the file to-be-deleted is still stored in the message digest list. If yes, ending the process. If no, executing Step 310.

Specifically, the message digest list is used to store a message digest of each storage file and a file name of each storage file, and the message digest of each storage file corresponds to the file name. If a file name of another file with a same message digest as the file to-be-deleted still exists, indicating that a plurality of different files may have the same message digest, the message digest is useful data and needs to be retained. If there is no file name of another file with the same message digest as the file to-be-deleted, the message digest is useless and needs to be deleted.

Step 310: deleting the message digest in the message digest list.

Specifically, since there is no file name of another file having the same message digest as the file to-be-deleted, the message digest is useless data and needs to be deleted. In this way, use of server space by useless data may be effectively reduced.

Following is a specific description with an example. An instruction to delete a file xA is received, and a location file xA.links is read in a storage directory of the file to-be-deleted xA. Contents of the location file is "AMD5 B", indicating that a same storage file of the file to-be-deleted is a file B. That is, the file to-be-deleted xA is a file stored in a path form. According to AMD5, a file name xA corresponding to AMD5 is deleted in the message digest list (as shown in Table 7). According to AMD5, a link list corresponding to AMD5 is obtained, and a link "B_xA" in the link list of AMD5 is deleted (as shown in Table 8). Then, a path xA stored in the server is deleted, that is, the file xA to be deleted is deleted. At this time, in the link list corresponding to AMD5, items B _B and B_xB are still stored, and the same file B is retained.

**Table 7. Message Digest List 1-4**

| Message Digest | File Name |
|---|---|
| AMD5 | B, xB |
| ...... | ...... |

**Table 8. Link List Corresponding to AMD5 1-4**

| |
|---|
| B_B |
| B xB |

Following is a specific description with another example. An instruction to delete a file xC is received, and a location file xC.links is read in a storage directory of the file to-be-deleted. A contents of the location file is "AMD5 B", indicating that a message digest of the file to-be-deleted xC is AMD5, and a same storage file of the file to-be-deleted is a file B, that is, the file to-be-deleted xC is a file stored in a path form. According to AMD5, a file name xC corresponding to AMD5 is deleted in the message digest list (as shown in Table 9). According to AMD5, a link list corresponding to AMD5 is obtained, and a link "B_xC" in the link list of AMD5 is deleted (as shown in Table 10), and it may be learnt that a source file to which the file to-be-deleted xC is linked is the file B. Then, a path xC stored in the server is deleted, that is, the file to-be-deleted xC is deleted. At this time, since in the link list corresponding to AMD5, there is no other link linking to the source file B, the storage space in the server occupied by the source file B is released. At this time, in the message digest list, the file name corresponding to AMD5 is only B, and the file B has been deleted, so the message digest AMD5 is deleted in the message digest list (as shown in Table 11).

**Table 9. Message Digest List 1-5-1**

| Message Digest | File Name |
|---|---|
| AMD5 | B |
| ...... | ...... |

**Table 10. Link List Corresponding to AMD5 1-5**

| | |
|---|---|
| | |

**Table 11. Message Digest List 1-5-2**

| Message Digest | File Name |
|---|---|
| ...... | ...... |

Following is a specific description with another example. An instruction to delete a file D is received, and a location file D.links is read in a storage directory of the file to-be-deleted. A content of the location file is "DMD5_D", indicating that a message digest of the file to-be-deleted D is DMD5, and a path pointing to a storage address of the file to-be-deleted D is D. That is, the file to-be-deleted D is not a file stored in a path form. According to DMD5, a file name D corresponding to DMD5 is deleted in the message digest list (as shown in Table 12). According to DMD5, a link list corresponding to the DMD 5 is obtained, and a link "D_D" is deleted in the link list of DMD5 (as shown in Table 13), and it may be learnt that a source file to which the file to-be-deleted D is connected is the file D. Then, a storage space occupied by the file to-be-deleted D in the server is released, that is, the file to-be-deleted D is deleted. At this time, in the link list corresponding to DMD5, there is no other link linking to the file to-be-deleted D, so the storage space occupied by the file to-be-deleted D needs to be released. At this time, in the message digest list, the file names corresponding to DMD5 still include D1 and D2, and the message digest DMD5 is retained.

**Table 12. Message Digest List 1-6**

| Message Digest | File Name |
|---|---|
| DMD5 | D1, D2 |
| ...... | ...... |

**Table13. Link List Corresponding to DMD5 1-6**

| | |
|---|---|
| | |

Compared with a conventional technology, in the third embodiment, the server stores a message digest list and a link list corresponding to each message digest in the message digest list, and storage modes for a message digest and a link of each storage file are provided. A location file, a message digest and a link of a storage file are correspondingly linked, such that the link of the storage file may be quickly searched and deleted. Specific implementations of file deletion are provided, and thus feasibility of the third embodiment is increased. Furthermore, in a process of deleting a file, it is judged whether a message digest and the like need to be deleted, thereby effectively reducing occupation of a server space by useless data.

Steps of the above various methods are divided for the sake of clear description. In an implementation, a plurality of steps may be combined into one step, or a step may be split and decomposed into a plurality of steps. Provided that a same logical relationship is included, these changes are within the protection coverage of the present disclosure. Adding insignificant modifications to an algorithm or process, or introducing an insignificant design, without changing the core design of algorithms and processes of the present disclosure, is covered by the present disclosure.

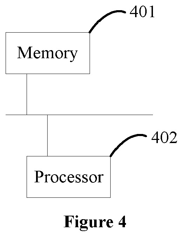

A fourth embodiment of the present disclosure relates to a server. As shown in Figure 4, the server includes at least one processor 402 and a memory 401 communicably coupled to the at least one processor 402. The memory 401 stores instructions executable by the at least one processor 402. The instructions are executed by the at least one processor 402, such that the at least one processor 402 may execute a file storage method described in the present disclosure, or execute a file deletion method described in the present disclosure.

The memory 401 and the processor 402 are connected through a bus, and the bus may include any number of interconnected buses and bridges. The bus connects various circuits of the one or more processors 402 and the memory 401. The bus may also connect various other circuits, such as peripherals, voltage regulators, power management circuits, etc. These are well known in the art, and thus are not further described herein. A bus interface provides an interface between the bus and a transceiver. The transceiver may be an element or a plurality of elements, such as a plurality of receivers and transmitters, providing units for communicating with various other devices on a transmission medium. Data processed by the processor 402 may be transmitted over a wireless medium via an antenna. Further, the antenna may also receive data and transmits the data to the processor 402.

The processor 402 is responsible for managing the bus and normal processing, and may also provide various functions including timing, peripheral interfaces, voltage regulation, power management, and other control functions. The memory 401 may be used to store data used by the processor 402 when performing operations.

It is worth mentioning that each module involved in the fourth embodiment is a logic module. In practical applications, a logical unit may be a physical unit or a part of a physical unit, or may be implemented by a combination of a plurality of physical units. In addition, to highlight innovative parts of the present disclosure, the fourth embodiment does not introduce a unit that is not closely related to solving the technical problems proposed by the present disclosure, but this does not mean that the fourth embodiment does not include other units.

A fifth embodiment of the present disclosure relates to a computer readable storage medium. The storage medium is stored with a computer program. When the computer program is executed by the processor 402, a file storage method provided by the present disclosure may be implemented, or a file deletion method provided by the present disclosure may be implemented.

That is, those skilled in the art may understand that all or part of the steps in implementing the foregoing file storage method or file deletion method may be completed by a program through instructing related hardware. The program may be stored in a storage medium. The program may include a plurality of instructions to make a device (may be a single-chip micyoco, a chip, etc.) or a processor for executing all or a part of steps of methods described in various embodiments of the present disclosure. The storage medium may include a variety of media that may store a program code, such as a U disk, a mobile hard disk, a read-only memory (ROM), a random access memory (RAM), a magnetic disk, an optical disk, and the like.

A person skilled in the art may understand that the above embodiments are specific embodiments for implementing the present disclosure. In actual applications, various changes may be made on these embodiments in form and detail, without departing from spirit and scope of the present disclosure.

## Claims

1. A file storage and deletion method, comprising:
receiving a file to-be-stored;
detecting, in stored storage files, whether there is a storage file that is same as the file to-be-stored; and
if there is the storage file that is same as the file to-be-stored, generating a path pointing to a storage address of the storage file same as the file to-be-stored, and storing the path generated as the file to-be-stored.

2. The method according to claim 1, wherein the detecting of, in the stored storage files, whether there is the storage file that is same as the file to-be-stored comprises:
calculating a message digest of the file to-be-stored;
detecting, in the stored storage files, whether there is a storage file having a message digest same as the message digest of the file to-be-stored;
if there is no storage file having the message digest same as the message digest of the file to-be-stored, determining that there is no storage file same as the file to-be-stored; and
if there is the storage file having the same message digest, comparing contents of the file to-be-stored and the storage file having the same message digest; and if the contents are same, determining that there is the storage file same as the file to-be-stored, and if the contents are not same, determining that there is no storage file same as the file to-be-stored.

3. The method according to claim 2, wherein the calculating of the message digest of the file to-be-stored comprises:
when a size of the file to-be-stored is less than a preset threshold, directly calculating the message digest of the file to-be-stored; and
when the size of the file to-be-stored is greater than or equal to the preset threshold, dividing the file to-be-stored into a preset size, and calculating the message digest of the file to-be-stored according to divided data.

4. The method according to claim 2, wherein the comparing of the contents of the file to-be-stored and the storage file having the same message digest comprises:
determining whether the file to-be-stored and the storage file having the same message digest have a same length;
if the file to-be-stored and the storage file having the same message digest have different lengths, determining that the contents of the file to-be-stored are different from the contents of the storage file having the same message digest; and
if the file to-be-stored and the storage file having the same message digest have a same length, dividing the file to-be-stored and the storage file having the same message digest respectively into divided parts by a binary search method, and sequentially comparing contents of each divided part, until contents of a divided part are found to be different or contents of all the divided parts are compared.

5. The method according to any one of claims 1-4, wherein:
generating the path pointing to the storage address of the storage file same as the file to-be-stored comprises:
generating a soft link or a shortcut of the file to-be-stored; and
linking the soft link or the shortcut generated to the storage address of the storage file same as the file to-be-stored, and
storing the path generated as the file to-be-stored comprises:
storing the soft link or shortcut of the file to-be-stored.

6. The method according to any one of claims 1-4, further comprising:
when there is no storage file same as the file to-be-stored, storing the file to-be-stored, and generating a location file of the file to-be-stored, wherein the location file includes a message digest of the file to-be-stored and a path pointing to a storage address of the file to-be-stored; or
after storing the path generated as the file to-be-stored, generating a location file of the file to-be-stored, wherein the location file includes a message digest of the file to-be-stored and a file name of the storage file same as the file to-be-stored.

7. A file deletion method, comprising:
receiving a file deletion instruction; and
if the file to-be-deleted is a file stored in a form of a path, deleting the path stored.

8. The method according to claim 7, wherein:
the file deletion method is applied to a server, and the server stores a location file of each storage file, wherein the location file is used to store a message digest of the storage file, and a path pointing to a storage address or a file name of a storage file same as the file to-be-deleted; and
the file deletion method further comprises:
after receiving the file deletion instruction, reading a location file of the file to-be-deleted;
determining, in the location file of the file to-be-deleted, whether there is a file name of a storage file same as the file to-be-deleted;
if there is the file name of the storage file same as the file to-be-deleted in the location file, determining that the file to-be-deleted is a file stored in a form of a path; and
deleting the location file of the file to-be-deleted.

9. The method according to claim 8, wherein:
the server also stores a message digest list, wherein the message digest list is used to store a message digest and a file name of a storage file corresponding to each message digest; the server also stores a link list, wherein each link in the link list corresponds to a message digest in the message digest list, and the link list is used to store at least one link of a storage file; and the link includes a source file to which the storage file is linked, and a storage address of the source file or a path pointing to the storage address of the source file; and
the file detection method further comprises:
after deleting the location file of the file to-be-deleted, according to the message digest of the file to-be-deleted, in the message digest list, deleting the file name of the file to-be-deleted corresponding to the message digest of the file to-be-deleted; and
according to the message digest of the file to-be-deleted, obtaining a link list corresponding to the message digest, and in the link list corresponding to the message digest, deleting the link of the file to-be-deleted.

10. The method according to claim 9, after deleting the path stored, further comprising:
determining, in the link list corresponding to the message digest, whether there is still a link linking to a same source file to which the file to-be-deleted is linked; and
if there is no link linking to a same source file to which the file to-be-deleted is linked, releasing a storage space occupied by the source file to which the file to-be-deleted is linked.

11. The method according to claim 10, after releasing the storage space occupied by the source file to which the file to-be-deleted is linked, further comprising:
determining, in the message digest list, whether there is still a file name of a file having a message digest same as the message digest of the file to-be-deleted; and
if there is no file having the message digest same as the message digest of the file to-be-deleted, deleting the message digest in the message digest list.

12. A server, comprising:
least one processor; and
a memory communicably coupled to the at least one processor, wherein:
the memory stores instructions executable by the at least one processor, and the instructions are executed by the at least one processor, such that the at least one processor executes the file storage method according to any one of claims 1-6, or execute the file deletion method according to any one of claims 7-11.

13. A computer readable storage medium, stored with a computer program, wherein, when the computer program is executed by a processor, the file storage method according to any one of claims 1-6 is implemented, or the file deletion method according to any one of claims 7-11 is executed.
